Europäisches Patentamt

European Patent Office

Office européen des brevets

(11) Veröffentlichungsnummer: **0 007 323**
**A1**

## (12) EUROPÄISCHE PATENTANMELDUNG

(21) Anmeldenummer: **78101820.5**

(22) Anmeldetag: **22.12.78**

(51) Int. Cl.³: **F 16 B 12/04**

(30) Priorität: **31.07.78 DE 2833575**

(43) Veröffentlichungstag der Anmeldung:
**06.02.80 Patentblatt 80 3**

(84) Benannte Vertragsstaaten:
**BE CH FR GB IT NL SE**

(71) Anmelder: **WILHELM RUHWINKEL & CO.**
**Emsdettener Strasse 233**
**D-4445 Neuenkirchen(DE)**

(72) Erfinder: **Ruhwinkel, Wilhelm**
**Pastorskamp 12**
**D-4445 Neuenkirchen(DE)**

(74) Vertreter: **Habbel, Hans-Georg, Dipl.-Ing.**
**Postfach 3429 Am Kanonengraben 11**
**D-4400 Münster(DE)**

(54) **Verfahren zum Verbinden von Holzbauteilen.**

(57) Bei der Herstellung von Gartenmöbeln aus Holz, die der Witterung ausgesetzt sind, besteht das Problem darin, die einzelnen Holzbauteile mit sich kreuzenden Faserrichtungen miteinander so fest zu verbinden, daß in diese Verbindungsstelle keine Feuchtigkeit eindringen kann. Hierzu wird vorgeschlagen, daß in wenigstens die Verbindungsfläche (5) des einen Holzbauteiles (1) zwei in Längsrichtung der Fasern verlaufende im Abstand voneinander angeordnete nach vorne spitz zulaufende Wulste (3,4) ausgeformt werden und die Holzbauteile so aufeinandergepreßt werden, daß sich die Wulste wenigstens teilweise in die Verbindungsfläche des anderen Holzbauteiles (2) einpressen.

Fig.1

EP 0 007 323 A1

- 1 -

## Verfahren zum Verbinden von Holzbauteilen

Die Erfindung bezieht sich auf ein Verfahren zum Verbinden von zwei aus Vollholz bestehenden sich an Verbindungsflächen berührenden Holzbauteilen mit unter einem Winkel zueinander verlaufenden Faserrichtungen für Möbel, insbesondere Gartenmöbel, unter Verwendung von Klebstoff oder Leim und ggf. metallischen Verbindungselementen, wie Nagelschrauben, bei dem zwischen die Verbindungsflächen eine Klebstoff- oder Leimschicht eingebracht wird, die Holzbauteile mit ihren Verbindungsflächen aufeinandergepreßt werden und ggf. die metallischen Verbindungselemente eingebracht werden.

Bei der Herstellung von Gartenmöbeln aus Holz, beispielsweise Sessel, besteht ein großes Problem darin, daß die einzelnen Holzbauteile mit sich kreuzenden Faserrichtungen miteinander fest verbunden werden müssen. Dabei ist zu berücksichtigen, daß die unterschiedliche Streck- und Arbeitsrichtungen aufweisenden Holzbauteile der Witterung ausgesetzt sind und damit
Bewegungen gegeneinander ausführen.

Wenn die Holzbauteile nicht fest miteinander verbunden sind, entstehen im Verbindungsbereich Spalte
und Öffnungen, die zum Eindringen von Wasser führen
und damit zur Zerstörung der Verbindung führen können.

Die bisher bekannten Konstruktionen bestehen darin,
daß die Elemente ineinander eingesenkt werden oder daß
die gesamten Bauteile so mit einer Kunststoffschicht
umgeben werden, daß die eigentlichen Holzflächen der
Witterung nicht mehr ausgesetzt sind.

Diese bekannten Konstruktionen haben den Nachteil, daß
sie entweder arbeitsaufwendig sind, oder aber daß trotz
des Kunststoffüberzuges ein Verletzen dieses Überzuges
eintreten kann, so daß dadurch die Verbindung zerstört
wird.

Es ist ferner ein Verfahren der eingangs genannten Art
bekannt. Bei diesem werden die Holzbauteile in Form
von Leisten od. dgl. flächig aufeinanderstoßend miteinander verleimt. Zur Verbesserung der Verbindung können
metallische Verbindungselemente, wie z.B. Nagelschrauben eingebracht werden. Ein derartiges Verfahren führt
zu einer Verbindung, bei welcher die vorstehend er-

- 3 -

wähnten Spalte und Öffnungen nicht vermieden werden können, da die Arbeitsrichtung der beiden Holzbauteile gegeneinandergerichtet ist.

Der Erfindung liegt die Aufgabe zugrunde, ein Verfahren der eingangs genannten Art zu schaffen, bei dem sich eine Verbindung ergibt, bei der die Gefahr, daß sie bei Witterungseinflüssen zerstört wird, herabgesetzt ist.

Diese Aufgabe wird dadurch gelöst, daß in wenigstens die Verbindungsfläche des einen Holzbauteiles wenigstens zwei in Längsrichtung der Fasern verlaufende, im Abstand voneinander angeordnete, nach vorne spitz zulaufende Wulste ausgeformt werden und daß das Aufeinanderpressen der Holzbauteile in einem solchen Ausmaß vorgenommen wird, daß sich die Wulste wenigstens teilweise in die Verbindungsfläche des anderen Holzbauteiles einpressen.

Durch diese Maßnahme erfolgt eine formschlüssige Verbindung zwischen den beiden Bauteilen.

Zwischen den beiden Wulsten verbleibt nach dem Aufeinanderpressen im allgemeinen eine Vertiefung, deren Oberfläche nicht mit dem zu verpressenden zweiten Bauteil im Preßzustand zur Anlage kommt, so daß zwischen diesen beiden Bauteilen innerhalb der Wulste ein Freiraum verbleibt, in dem Klebstoff vorhanden ist, der sich hier dadurch insbesondere ansammelt, daß er aus den miteinander verpreßten Bereichen hierhin getrieben wird. Der Klebstoff füllt diesen Raum aus, so daß das Eindringen von Feuchtigkeit nicht möglich ist. Der Freiraum gibt aber die Möglichkeit, daß gewisse Verformungen und Ausweichungsbestrebungen des einen oder anderen Bauteils während des Verpreßvorganges hier einen Platz finden, in dem sie sich ausgleichen können.

Es folgt die Beschreibung eines Ausführungsbeispieles der Erfindung anhand der Zeichnung. Die Zeichnung zeigt dabei in

Fig. 1          drei miteinander zu verbindende Holz-
                bauteile und in

Fig. 2          die Teile gemäß Fig. 1 im miteinander
                verbundenen Zustand.

In der Zeichnung ist das erste Holzbauteil mit 1 bezeichnet. Es stellt beispielsweise die Strebe der Rücklehne eines Gartenstuhls dar. Als zweites Holzbauteil sind quergerichtete horizontale Leisten 2 angeordnet, die die Rücklehne bilden. Die Holzbauteile 1 sind dabei, wie dies aus der Zeichnung deutlich zu erkennen ist, an ihrer mit den Holzbauteilen 2 in Kontakt kommenden Verbindungsflächen anders bearbeitet als auf der gegenüberliegenden Seite, nämlich derart, daß hier Wulste 3 und 4 ausgeschnitten oder ausgeformt oder ausgefräst sind. Diese Wulste sind im Horizontalschnitt gesehen dreieckförmig ausgebildet und laufen nach vorne spitz zu.

Zwischen den Wulsten 3 und 4 befindet sich eine Vertiefung 5.

Die Bauteile 1 und 2 werden nunmehr dadurch miteinander verbunden, daß auf die miteinander zu verbindenden Teile ein Preßdruck ausgeübt wird, der zwischen 15 und 40 Tonnen pro laufendem Meter Strebe beträgt. Die Höhe dieses Preßdruckes richtet sich nach der Holzart, insbesondere danach, ob es sich um ein Weich- oder Hartholz handelt.

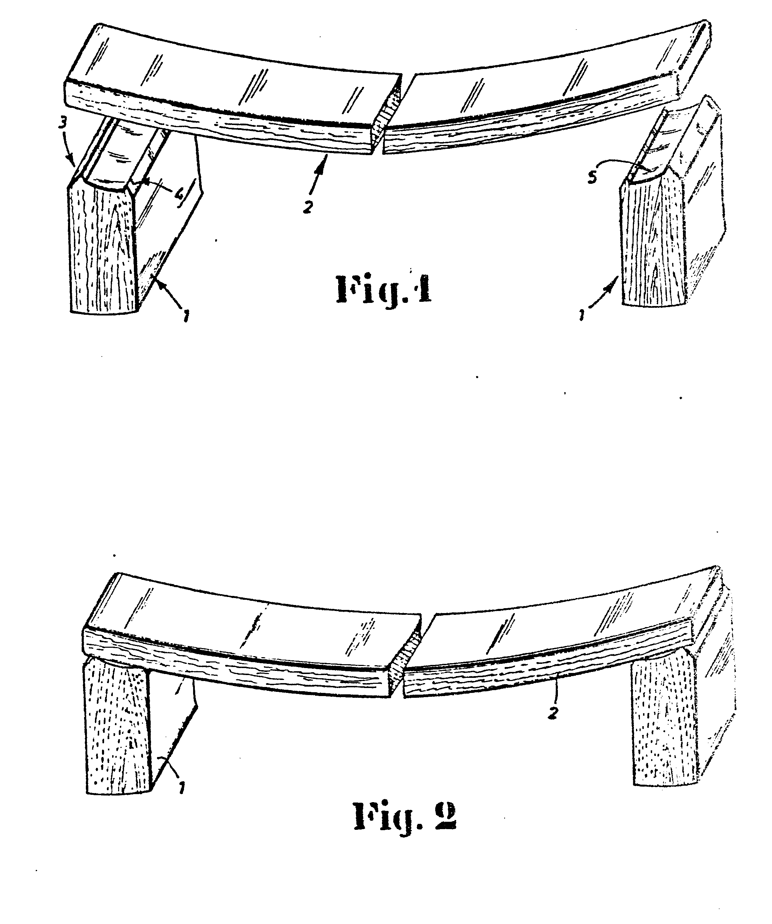

Wie die Darstellung in Fig. 2 verdeutlicht, dringen die Wulste 3 und 4 relativ tief in das Holz des Bauteiles 2 ein, wobei aber der zwischen den Wulsten 3 und 4 befindliche Freiraum auch im eingepreßten Zustand frei bleibt, so daß sich in diesem Raum Leim ansammeln kann.

Die Anwendung von Nagelschrauben ist aus der Zeichnung nicht erkennbar.

- 1 -

Patentanspruch:

Verfahren zum Verbinden von zwei aus Vollholz bestehenden sich an Verbindungsflächen berührenden Holzbauteilen mit unter einem Winkel zueinander verlaufenden Faserrichtungen für Möbel, insbesondere Gartenmöbel, unter Verwendung von Klebstoff oder Leim und ggf. metallischen Verbindungselementen, wie Nagelschrauben, bei dem zwischen die Verbindungsflächen eine Klebstoff- oder Leimschicht eingebracht wird, die Holzbauteile mit ihren Verbindungsflächen aufeinandergepreßt werden und ggf. die metallischen Verbindungselemente eingebracht werden, dadurch gekennzeichnet, daß in wenigstens die Verbindungsfläche des einen Holzbauteiles wenigstens zwei in Längsrichtung der Fasern verlaufende, im Abstand voneinander angeordnete, nach vorne spitz zulaufende Wulste ausgeformt werden und daß das Aufeinanderpressen der Holzbauteile in einem solchen Ausmaß vorgenommen wird, daß sich die Wulste wenigstens teilweise in die Verbindungsfläche des anderen Holzbauteiles einpressen.

**Fig.1**

**Fig. 2**

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| | DE – C – 609 338 (TÜTSCH) <br> * Anspruch 3 * <br><br> –– | 1 | F 16 B   12/04 |
| | DE – C – 569 550 (MOLL) <br> * Fig. 3 * <br><br> –– | 1 | |
| A | DE – U – 7 116 575 (VOLMER) <br><br> –– | | |
| A | US – A – 3 400 847 (STUTE) <br><br> –––– | | |

RECHERCHIERTE SACHGEBIETE (Int. Cl.³)

A 47 C    7/66

B 27 G    11/00

F 16 B    12/00

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie. Übereinstimmendes Dokument

| X | Der vorliegende Recherchenbericht wurde für alle Patentansprüche erstellt. |

| Recherchenort | Abschlußdatum der Recherche | Prüfer |
|---|---|---|
| Berlin | 02-10-1979 | ZAPP |

EPA form 1503.1   06.78